# EUROPEAN PATENT SPECIFICATION

(11) **EP 3 120 096 B1**
(45) Date of publication and mention of the grant of the patent: **06.06.2018**
(21) Application number: 15708795.8
(22) Date of filing: 04.03.2015
(51) Int. Cl.: F28D 20/02, H02S 10/30

(54) **ELECTRIC ENERGY STORAGE SYSTEM**
ELEKTRISCHES STROMSPEICHERSYSTEM
SYSTÈME DE STOCKAGE DE L'ÉNERGIE ÉLECTRIQUE

(30) Priority: 05.03.2014 US 201414198142
(43) Date of publication of application: 25.01.2017
(73) Proprietor: Universidad Politécnica De Madrid, 28040 Madrid (ES)
(72) Inventor: DATAS MEDINA, Alejandro, E-28040 Madrid (ES); MARTÍ VEGA, Antonio, E-28040 Madrid (ES); DEL CAÑIZO NADAL, Carlos, E-28040 Madrid (ES); LUQUE LÓPEZ, Antonio, E-28040 Madrid (ES)
(74) Representative: ABG Patentes, S.L.
(86) International application number: PCT/EP2015/054525
(87) International publication number: WO 2015/132305

(56) References cited:
- WO-A1-99/07021
- WO-A2-2005/048310
- GB-A- 2 493 092
- US-A- 5 932 029
- US-A1- 2011 083 436

## Description

### TECHNICAL FIELD

The technical field relates to the field of energy storage and more particularly relates to an electric energy storage system capable of storing energy by means of latent heat in a phase change material.

Document US 2011/083436 is considered as representing the closest prior-art to the subject-matter of claim 1, and discloses an energy storage system, comprising: a vessel containing a phase change material; a heat source; and heat receiving elements.

### BACKGROUND

Electricity energy storage can be accomplished by means of several technologies, such as: compressed air energy storage (CAES), pumped hydroelectric, flywheels, supercapacitors, superconducting magnetic storage, electrical batteries and vanadium redox flow batteries. All these technologies enable the storage of an excess of electricity in the grid for later on-demand electricity production. Among all these technologies, batteries stand out as a modular and versatile technology that may be used distributively, i.e. at homes and in electric vehicles. However, they require the use of expensive and relatively scarce materials, such as lithium, which represents a fundamental limitation for its implementation as a large-scale electric storage solution. Besides, batteries present other unresolved drawbacks: first, they are not fully scalable; second, storage energy density is relatively low (thus limiting their use in portable applications); and finally, they may have negative health and environmental impacts, due to the use of heavy metals such as mercury, lead, cadmium, nickel, lithium or cobalt.

Therefore, it is desirable to provide a modular and versatile energy storage system for electric energy storage that provides enhanced energy density, that is fully scalable and that uses abundant and safe materials. Further, it is desirable to provide an energy storage system that substitutes batteries for general purpose electricity storage, and provides a more secure, cheaper and environment friendly solution.

In addition, other objects, desirable features and characteristics will become apparent from the subsequent summary and detailed description, and the appended claims, taken in conjunction with the accompanying drawings and this background.

### SUMMARY

According to the various teachings of the present disclosure, an energy storage system is provided.

In various embodiments according to the present disclosure, an energy storage system comprises: a vessel made of a refractory material and containing a phase change material, a thermally insulating cover at least partially surrounding the vessel, an emitter, made of a refractory material, having a first side arranged to be heated by the phase change material and a second side intended to radiate thermal power, at least one photovoltaic cell arranged to receive the thermal power emitted by the second side of the emitter, and electric means for heating the phase change material.

The present disclosure is thus based on latent heat storage, which differentiates from sensible heat storage in that thermal power is released at a constant temperature, during the solidification process of the phase change material. Those phase change materials having high latent heat of fusion and melting point are capable of storing large amounts of energy in the phase change from solid to liquid, subsequently releasing the stored energy when the material changes from liquid to solid.

According to the various teachings of the present disclosure, electric means for heating are provided which are capable of using electricity to heat the phase change material contained in the vessel, thus causing the phase change material to melt. The melted phase change material heats the first side of the emitter, i.e. the side of the emitter most proximate to and facing towards the phase change material. The emitter, in turn, radiates thermal power from its second side, i.e. the side opposed to the first side. During the power production mode of operation, thermal power is radiated from the emitter towards the photovoltaic cells, which are used to convert the thermal radiation outgoing from the emitter into electricity. During this process, the phase change material solidifies at a nearly constant temperature. During the storage mode of operation, the thermal power emitted by the emitter is turned back to the emitter, thus maintaining the phase change material in the melted phase. The thermally insulating cover at least partially surrounding the vessel keeps the phase change material thermally insulated, thus allowing it to maintain its melted state.

According to various embodiments of the present disclosure, a part of the vessel, such as a vessel wall or a part of a vessel wall, works as the emitter. In other embodiments, the emitter is implemented as a separate element.

Photovoltaic cells have demonstrated efficiencies above 24% in the direct conversion of thermal radiation into electricity. However, in various embodiments efficiencies higher than 50% can be achieved by using the appropriate spectral control components, such as back-side reflectors or selective emitters or alternatively by using multijunction cells. The photovoltaic cells provide additional advantages over other thermal generators, such as turbines. First, the absence of physical contact with the hot reservoir allows operating at an arbitrarily high temperature. Second, they have a very low weight and volume, enabling very high power-to-weight and power-to-volume ratios. Finally, photovoltaic cells are solid-state devices, so that they do not require any moving part, minimizing complexity and reliability issues, as well as allowing for low-noise operation.

Generally, the vessel and the emitter are made of a refractory material.

In various embodiments, the phase change material is metallurgical-grade silicon, ferrosilicon, steel, copper, iron, aluminum, manganese, nickel, chromium, boron, B₄C, Si₃N₄ or Al₂O₃. In one example, metallurgical-grade silicon or ferrosilicon are used for the phase change material due to silicon's extremely high latent heat of 1800 kJ/kg, high thermal conductivity of up to 150 W/m-C and high melting point of 1400°C, which provides an extraordinary high energy density capacity. Besides, silicon is one of the most abundant elements on earth and has a low cost. An additional advantage related to the use of ferrosilicon as phase change material is achieved by tuning the iron content in the ferrosilicon material, which allows modifying the thermomechanical characteristics, such as the volumetric expansion coefficient during the solidification of melted silicon, which reduces the thermal stress on the vessel walls during the solidification process.

Alternatively or additionally to any embodiment disclosed herein, in certain embodiments of the energy storage system the at least one photovoltaic cell is made of at least one semiconductor material. In various embodiments said semiconductor material is InGaAs, InGaAsSb, AlGaSb, InAsSb, GaSb, Ge or Si. InGaAsSb may be desirable because of the broader range of bangap energy combinations that are possible in the infrared range (from 0.3 to 0.7 eV), which enables the fabrication of dual junction photovoltaic cells with an optimum combination of bandagps.

Alternatively or additionally to any embodiment disclosed herein, in certain embodiments of the energy storage system the at least one photovoltaic cell comprises a single p-n junction, multiple p-n junctions of different materials grown monolithically or monolithic interconnected photovoltaic modules. In one example, multijunction cells are employed because the efficiency and very especially the electrical power density of the system, can be boosted.

Alternatively or additionally to any embodiment disclosed herein, in certain embodiments of the energy storage system, the vessel is made of any of the following refractory materials: Si₃N₄, SiC, SiO₂, saphire, steatite, cordierite, mullite, boron carbide, boron nitride, aluminum nitride, alumina, spinel, zirconia, ceramic matrix composites, fiber reinforced composites, graphite, B₄C, TiB₂, tungsten, tantalum, molybdenum, niobium, rhenium, WSi₂, TiSi₂, MoSi₂, TaSi₂, WC, W-Re, W-ThO₂, W-Mo, AKS-W, W-Ni-Cu, W-Ni-Fe-Co or W-Mo-Ni-Fe. In one example, Si₃N₄ and SiC are employed when silicon is used as phase change material, because of the low reactivity of these ceramics with melted silicon.

In various embodiments, the electric means for heating the phase change material are electric means capable of generating an electromagnetic field, which use electromagnetic induction for melting an electrically conductive phase change material. The magnetic field generates the so-called eddy currents within the phase change material, which in turn heat up the phase change material by Joule effect until melting. This embodiment also has the benefit of that the heating process is contact-less, enabling an efficient thermal insulation of the melted material. An additional advantage of the use of a magnetic induction field is that the magnetic induction field and the eddy current combine to create an electro-magnetic force, which causes a stirring motion in the melted phase change material. Stirring is beneficial to enhance the energy transfer from the liquid phase to the solid phase of the phase change material and to the emitter and also to achieve a more uniform solidifying process and to avoid the formation of a thick solid phase layer near the emitter that could drastically deteriorate the heat transfer from the liquid phase to the emitter.

In various embodiments, the electric means for heating the phase change material comprise a metallic coil, in one example, water-cooled copper rings, placed surrounding the thermally insulating cover for generating an electromagnetic field within the phase change material when an alternating electric current is made flow through the metallic coil. Where the metallic coil is water-cooled, the energy storage system allows the additional storage of the coolant hot water for later use in domestic applications, thereby providing both heat and power.

In one of various embodiments, the electric means for heating the phase change material use resistive heating for melting the phase change material. This embodiment has the benefit of a very high efficiency of the melting process, since most of the input electrical power is used on heating the phase change material. In various embodiments, the electric means for heating the phase change material comprise resistive heaters arranged at least partially surrounding outer walls of the vessel. In various embodiments the resistive heaters are made of any of the following materials: tungsten, tantalum, molybdenum, graphite, WC, WSi₂, TiSi₂, MoSi₂, TaSi₂, Pt, Pd, Ir, Rh, Os, Re, W-Re, W-ThO₂, W-Mo, AKS-W, W-Ni-Cu, W-Ni-Fe-Co, W-Mo-Ni-Fe or Fe-Cr-Al-Ni alloys.

Alternatively or additionally to any embodiment disclosed herein, in one of various embodiments of the energy storage system, the electric means for heating the phase change material comprise electrodes arranged at least partially within the vessel. This embodiment has the benefit of a very high efficiency of the melting process, since most of the input electrical power is used on heating the phase change material. In various embodiments the electrodes are made of any of the following materials: tungsten, tantalum, molybdenum, graphite, WC, WSi₂, TiSi₂, MoSi₂, TaSi₂, Pt, Pd, Ir, Rh, Os, Re, W-Re, W-ThO₂, W-Mo, AKS-W, W-Ni-Cu, W-Ni-Fe-Co, W-Mo-Ni-Fe or Fe-Cr-Al-Ni alloys.

In various embodiments the electric means for heating comprise both means for resistive heating and means for magnetic induction heating. In such embodiments a low power may be used for the magnetic induction means for heating, such that the heating of the phase change material is mainly due to the resistive heating means, while the stirring effect caused by the magnetic induction means for heating is still obtained.

Alternatively or additionally to any embodiment disclosed herein, in certain embodiments the at least one photovoltaic cell comprises infrared reflectors provided on their back side, such as Bragg reflectors or highly reflective metallic layers.

Alternatively or additionally to any embodiment disclosed herein, in certain embodiments the emitter is made of Si₃N₄, SiC, Saphire, Steatite, Cordierite, Mullite, Boron Carbide, Boron Nitride, Aluminum Nitride, Alumina, Spinel, Zirconia, ceramic matrix composites, tungsten, hafnium carbide, hafnium oxide, tantalum, tungsten carbide, zirconium carbide, zirconium oxide, graphite, molybdenum, yttrium oxide, platinum, holmium oxide, erbium oxide, aluminum oxide, ytterbium oxide, MoSi₂, SiC, Fe-Cr-Al-Ni alloys, Pt, Pd, Ir, Rh, Os or Re, or of an alloy thereof. In one example, tungsten, tantalum, molybdenum, graphite or SiC are used due to their very low evaporation rate, very high melting points and relatively high emissivity. In various embodiments the surface of the second side of the emitter is textured to enhance its emissivity.

Alternatively or additionally to any embodiment disclosed herein, in certain embodiments the emitter comprises a spectrally selective emitting layer provided on the second side facing the at least one photovoltaic cell, generally including a multilayer stack or a two-dimensional photonic crystal.

Alternatively or additionally to any embodiment disclosed herein, in certain embodiments the energy storage system further comprises a transparent protective window provided between the emitter and the at least one photovoltaic cell. In various embodiments the protective window is made of pure quartz, vycor quartz, CaF, MgF, BaF₂, Y₂O₃, A1N, BN, Al₂O₃, TiO₂, MgO, SiC, LaF₃, GaP, Si₃N₄, ZnS, ZnSe, Al₂₃O₂₇N₅, MgAl₂O₄, SrTiO₃, Y₃Al₅O₁₂ or BaTiO₃. Alternatively or additionally to any embodiment disclosed herein, in certain embodiments the energy storage system comprises a sealed cavity formed between the emitter and the protective window and an inert atmosphere is created within the cavity. Advantageously, this inert atmosphere prevents the oxidation of the emitter. The inert atmosphere in one example, comprises a vacuum, a noble gas or a halogen gas.

Alternatively or additionally to any embodiment disclosed herein, in certain embodiments an inert atmosphere is created within the vessel and at least partially surrounds the phase change material. This inert atmosphere generally comprises a noble gas, such as argon.

Alternatively or additionally to any embodiment disclosed herein, in certain embodiments a cavity is formed between the emitter and the at least one photovoltaic cell, wherein an inert atmosphere, in one example, a vacuum, a noble gas or a halogen gas, is created within the cavity.

Alternatively or additionally to any embodiment disclosed herein, in certain embodiments at least part of a vessel wall is configured as the emitter. The part of the vessel which is configured as emitter is not provided with a thermally insulating cover in order to allow thermal radiation from this part towards the at least one photovoltaic cell.

Alternatively or additionally to any embodiment disclosed herein, in certain embodiments the energy storage system further comprises at least one shutter located between the emitter and the at least one photovoltaic cell, such that in a closed position of the shutter the passage of radiation from the emitter to the at least one photovoltaic cell is hindered and in an open position of the shutter the passage of radiation from the emitter to the at least one photovoltaic cell is permitted.

Alternatively or additionally to any embodiment disclosed herein, in certain embodiments the emitter is configured as an upper wall of the vessel, the energy storage system comprises at least one photovoltaic cell facing towards the emitter, and the energy storage system further comprises a shutter located between the emitter and the at least one photovoltaic cell, such that in a closed position of the shutter the passage of radiation from the emitter to the at least one photovoltaic cell is hindered and in an open position of the shutter the passage of radiation from the emitter to the at least one photovoltaic cell is permitted.

Alternatively or additionally to any embodiment disclosed herein, in certain embodiments the energy storage system further comprises a mechanism to move the photovoltaic cell towards or away from the emitter.

Alternatively or additionally to any embodiment disclosed herein, in certain embodiments the emitter is located at the bottom part of the vessel, such that the phase change material is located over the emitter, the energy storage system comprises at least one photovoltaic cell facing towards the emitter, and the energy storage system further comprises a shutter located between the emitter and the at least one photovoltaic cell, such that in a closed position of the shutter the passage of radiation from the emitter to the at least one photovoltaic cell is hindered and in an open position of the shutter the passage of radiation from the emitter to the at least one photovoltaic cell is permitted.

This embodiment has the advantage that the phase change material starts solidifying from the lower part, thus avoiding the creation of a solid layer on top of the phase change material that could confine the liquid phase of the phase change material within a closed container conformed by the vessel walls and the solidified layer of the phase change material. Also, in materials where the density of the solid phase is lower than that of the liquid phase, such as silicon, this embodiment avoids the possible fracture of the vessel owing to the thermal stress occurring during the expansion of the phase change material during the solidifying process. This is because the liquid phase has always a volume available in the upper part of the vessel for its expansion during the solidifying process.

Alternatively or additionally to any embodiment disclosed herein, in certain embodiments the energy storage system further comprises a conduit suitable for carrying a fluid and arranged at least partially surrounding the vessel, between the vessel and the thermally insulating cover. Advantageously, this embodiment allows the energy storage system to simultaneously provide electricity and heat.

Alternatively or additionally to any embodiment disclosed herein, in certain embodiments the emitter is cylindrical cup-shaped, the cup-shape of the emitter conforming an emitter cavity adapted to receive the at least one photovoltaic cell, wherein an outer surface of the cylindrical cup-shaped is arranged to be heated by the phase change material and an inner surface of the cylindrical cup-shaped is intended to radiate thermal power towards the at least one photovoltaic cell, and the vessel comprises an open hole in which the emitter is received.

Advantageously, this embodiment allows thermal insulation of the system without requiring the presence of a shutter, since the emitter is kept thermally insulated when the photovoltaic cells are retired from the emitter cavity. Therefore, a high degree of thermal insulation is achieved.

Advantageously, in this embodiment the solidification starts near the cylindrical emitter walls and progress concentrically to that cylinder. For phase change materials in which the solid phase has lower density than the liquid phase, such as silicon, this embodiment provides a volume available in the upper part of the vessel for the expansion of the liquid phase of the phase change material during the solidifying process. This avoids excessive mechanical stress over the vessel walls.

Alternatively or additionally to any embodiment disclosed herein, in certain embodiments the energy storage system comprises a plurality of photovoltaic cells provided on each side of a polyhedral-shaped photovoltaic device.

All the features described in this specification (including the claims, description and drawings) and/or all the steps of the described method can be combined in any combination, with the exception of combinations of such mutually exclusive features and/or steps.

A person skilled in the art can gather other characteristics and advantages of the disclosure from the following description of exemplary embodiments that refers to the attached drawings, wherein the described exemplary embodiments should not be interpreted in a restrictive sense.

### BRIEF DESCRIPTION OF THE DRAWINGS

The various embodiments will hereinafter be described in conjunction with the following drawing figures, wherein like numerals denote like elements, and wherein:
Fig. 1 shows an energy storage system according to an exemplary embodiment of the present disclosure.
Fig. 2 shows an energy storage system according to an exemplary embodiment of the present disclosure.
Fig. 3 shows a perspective view of a photovoltaic array according to the embodiment of Fig. 2.
Fig. 4 shows another view of the photovoltaic array of Fig. 3.
Fig. 5 shows an energy storage system according to an exemplary embodiment of the present disclosure.
Fig. 6 shows an energy storage system according to an exemplary embodiment of the present disclosure.
Fig. 7 shows an energy storage system according to an exemplary embodiment of the present disclosure.

### DETAILED DESCRIPTION

The following detailed description is merely exemplary in nature and is not intended to limit the present disclosure or the application and uses of the present disclosure. Furthermore, there is no intention to be bound by any theory presented in the preceding background or the following detailed description.

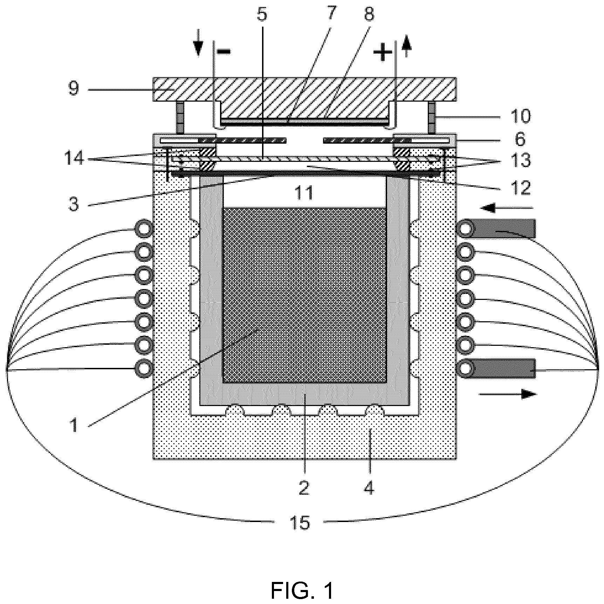

Fig. 1 shows an energy storage system according to one exemplary embodiment of the present disclosure. In this embodiment the energy storage system includes a phase change material (1) contained in a containment vessel (2). In this embodiment part of the vessel walls comprises a thermal emitter (3) which is heated by the melted material, namely an upper wall of the vessel is configured as the emitter in this embodiment. A thermally insulating cover (4) surrounds the remaining walls of the vessel. A photovoltaic device (7) including one or several photovoltaic cells is arranged facing the emitter (3). In this embodiment, a transparent protective window (5) is provided between the emitter (3) and the photovoltaic device (7), covering the emitter (3). A shutter (6) is arranged between the window (5) and the photovoltaic device (7), which can be opened to release the energy stored in the phase change material (1). During the power production mode of operation the shutter (6) is open and the phase change material begins to solidify at a nearly constant temperature. The phase change material heats the side of the emitter most proximate to the phase change material and the side of the emitter facing the photovoltaic cells radiates thermal power. Energy is thereby released by means of the radiation from the emitter (3) towards the photovoltaic device (7), which directly produces electricity. During the storage mode of operation, the thermal power emitted by the emitter is turned back to the emitter due to the presence of a closed shutter, thus maintaining the phase change material in the melted phase and hindering the radiation from the emitter to reach the photovoltaic device.

With continued reference to the energy storage system of Fig. 1, the photovoltaic device (7) is bonded to a highly thermally conductive substrate (8) which is mounted on a heat sink (9). The energy storage system of this embodiment further comprises a mechanism to move the photovoltaic device (7) towards and away from the emitter (3). When the shutter (6) opens, the photovoltaic device (7) is thus moved close to the emitter by actuating on pumps (10) that hold the heat sink. Similarly, the photovoltaic device (7) is moved away from the emitter when the shutter (6) is closed. The cavity (11) formed in between the surface of the phase change material (1), the vessel (2) and the emitter (3) is sealed and filled with an inert gas. Also, the cavity (12) formed in between the emitter (3) and the window (5) is sealed and filled with a protective atmosphere that prevents the oxidation of the emitter (3). In various embodiments, sealing rubbers (13) are used for sealing each of these cavities. In various embodiments highly reflective walls (14) are used in the lateral sides of the optical cavity formed by the photovoltaic device (7), the protective window (5) and the emitter (3) for thermal radiation confinement.

Finally, in the embodiment of Fig. 1 the electric means for heating the phase change material are implemented as a water-cooled copper coil (15) which surrounds the thermally insulating cover (4). When an alternating current is passed through this coil (15) an electromagnetic field is created that generates the so-called Eddy currents within the electrically conductive phase change material (1), which in turn heats up the phase change material by Joule effect until melting.

In various embodiments, the phase change material (1) is metallurgical-grade silicon, which has a very high latent heat of fusion of about 1800 kJ/kg, high thermal conductivity of up to 150 W/m-C and a melting point of 1400°C. In various embodiments doping materials, such as boron or phosphorous or magnetic materials, such as iron or nickel, are added to silicon to increase its electrical conductivity and its magnetic permeability, respectively, and thereby enhance the inductive heat transfer. In various embodiments, other materials with a high latent heat of fusion and melting point that are used as phase change material are steel, copper, iron, aluminum, manganese, nickel, chromium and boron.

In various embodiments the vessel (2) is made of a refractory material which is electrically isolating to avoid its direct heating by inductive electromagnetic fields. In various embodiments, Si₃N₄ is used. Alternatively, other materials such as SiC, B₄C, TiB₂, saphire, steatite, cordierite, mullite, boron carbide, boron nitride, aluminum nitride, alumina, spinel or zirconia may be used, as well as ceramic matrix or fiber reinforced composites, which provide a superior thermal cycle resistance.

In various embodiments, however, an electrically conductive vessel is used. This can be done in combination with either an electrically isolate or conductive phase change material, e.g. silicon. In the former case, the phase change material is heated indirectly by first heating the conductive vessel. In one example, tungsten is used in this case for manufacturing the vessel. Other possible options for the vessel material are: graphite, refractory metals such as tantalum, molybdenum, niobium, and rhenium; refractory metals silicides such as WSi₂, TiSi₂, MoSi₂ and TaSi₂ and other refractory metal alloys such as WC, W-Re, W-ThO₂, W-Mo, AKS-W, tungsten heavy alloys such as W-Ni-Cu, W-Ni-Fe-Co and W-Mo-Ni-Fe. In these embodiments, electrically isolating phase change materials may be used in addition to the electrically conductive materials already mentioned. Among them, boron may be used due to its extremely high latent heat of fusion of 4600 kJ/kg and its melting point of 2077°C. Alternatively, other materials such as B₄C, Si₃N₄ or Al₂O₃ may be used.

In various embodiments, the thermally insulating cover (4) is made of a refractory electrically isolating material with a low thermal conductivity and low thermal mass. Besides, a highly reflective material is desirable for the inner surface of the thermally insulating cover (4). In one embodiment, the insulating walls are made of Al₂O₃. Alternatively, other materials with the lowest thermal conductivity, such as Mullite, Cordierite, Zirconia and Steatite, may be also used for the thermally insulating cover (4). Ceramic fibers may be also used instead or in combination with the aforementioned materials as the thermally insulating cover (4). In one example, ceramic fibers made of Al₂O₃-SiO₂ are ideal for low weight and low thermal mass insulation.

In various embodiments, the emitter (3) is made of a highly thermally conductive refractory material with low vapor pressure and high emissivity in its second side. Any of the materials specified for the vessel (2) are also usable for building the emitter (3). Generally, those materials having the lowest vapor pressure at high temperatures may be employed, such as tungsten, graphite, molybdenum, tantalum, platinum, hafnium carbide, tungsten carbide, zirconium carbide, zirconium oxide, hafnium oxide, yttrium oxide, holmium oxide, erbium oxide, aluminum oxide and ytterbium oxide.

In various embodiments, materials allowing operation in air, thus avoiding the use of a protective atmosphere are chosen for the emitter. This is the case of most of the oxide-based ceramics and other refractory materials such as Si₃N₄, MoSi₂, SiC and Fe-Cr-Al-Ni alloys such as Inconel® and Kanthal®. For the latter compounds, the main concern is the rate of emitter evaporation own to their high vapor pressure. Other materials, such as Pt, Pd, Ir, Rh, Os, Re and their alloys show a very low vapor pressure and can also be operated in air.

When the emitter is made of a metallic material, it may be covered by a thin film of an oxide, such as hafnium oxide, to provide some degree of spectral selective emission, the layer thickness being generally in the range of about 100 nm to about 500 nm, depending on the desired cut-off wavelength. Alternatively, a two-dimensional photonic crystal may be manufactured on the second surface of the emitter to enhance the emissivity in the spectral band of interest for photovoltaic conversion. In this embodiment, a protective atmosphere is required in the cavity (12) for preventing the metal oxidation. In one embodiment, this atmosphere comprises a vacuum. Alternatively, a regenerative halogen cycle, mostly based on iodine, may be used to return evaporated metal from the window to the emitter.

In various embodiments a protective atmosphere of inert gas is used within the vessel cavity (11) to avoid the oxidation of the phase change material (1). In one embodiment, argon is used.

In various embodiments, the shutter (6) is made of alumina, which has a very high reflectivity in the infrared range. Several consecutive shutters may be placed one after the other to provide enhanced thermal insulation during the storing time.

In various embodiments the photovoltaic device comprises several photovoltaic cells integrated in a highly dense packed array. This array may be formed, for example, according to International Pub. No. WO 2009149505 A1 or International Pub. No. WO 2001099201 A1, which are each incorporated herein by reference.

In various embodiments, the photovoltaic cells comprise single p-n junctions made of InGaAsSb semiconductor grown on a GaSb substrate and comprise a back surface reflector. Alternatively, multijunction cells or monolithic interconnected modules, such as those described in U.S. Pat. No. 6,162,987, which is also incorporated herein by reference, may be used.

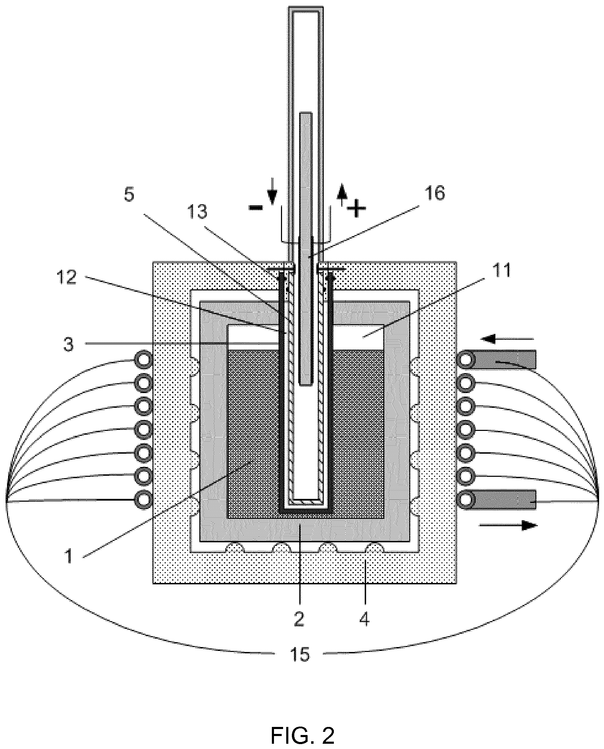

Fig. 2 shows an energy storage system according to an embodiment of the present disclosure. The energy storage system according to this embodiment includes a phase change material (1) within a containment vessel (2), and a thermally insulating cover (4) surrounding the vessel (2). Both the vessel (2) and the thermally insulating cover (4) have an open hole adapted to receive a cylindrical cup-shaped emitter (3). The cylindrical cup-shaped emitter (3) is thus arranged to be heated from its first surface (i.e. the surface of the emitter most proximate to the phase change material, which in this case is the outer surface of the cylindrical cup-shape) by the melted phase change material. A cylindrical cup-shaped transparent window (5) is provided concentrically to the emitter (3) and covers the inner side of the emitter. The cup-shape of both the emitter and the protective window configure an emitter cavity capable of receiving one or several photovoltaic cells. In this embodiment, the energy storage system includes a plurality of photovoltaic cells conforming a photovoltaic device. The photovoltaic device (16) is configured to be polyhedral-shaped and is introduced within the emitter cavity, thereby producing electricity from the thermal power emitter by the inner side of the cylindrical cup-shaped emitter, due to the heating of the outer side of the emitter by the energy released from the melted material (1). Each side of that polyhedron contains a string (17) of series or parallel connected photovoltaic cells (20).

With continued reference to the embodiment of Fig. 2, a cavity (11) formed between the phase change material (1), the vessel (2) and the emitter (3) is sealed and filled with an inert gas. A second cavity (12) formed between the emitter (3) and the protective window (5) is sealed and filled by a protective atmosphere. In this embodiment sealing rubbers (13) are used for sealing each of these cavities. Finally, a water-cooled copper coil (15) surrounds the walls of the thermally insulating cover (4). When an alternating current is passed through this coil, it generates an electromagnetic field that generates the so-called eddy currents within the phase change material, which in turn heat up the phase change material (1) by Joule effect until melting. In this embodiment, the energy storage system includes a mechanism to move the photovoltaic device away from the emitter cavity during the heating process of the phase change material by the electric means for heating, in order to avoid the melting of the photovoltaic cells in the storage mode of operation of the system. In the storage mode of operation of the energy storage system, the inner surface of the emitter radiates towards the same surface due to the emitter shape, thus turning thermal power emitted by the emitter back to the emitter. In the power production mode of operation of the system, the mechanism is actuated to move the photovoltaic device towards the emitter, thus placing the photovoltaic device within the emitter cavity. In this position of the photovoltaic device, the photovoltaic cells receive the thermal power emitted by the emitter, as previously described.

In the embodiment of Fig. 2, the emitter (3) is in one example, made of an electrically isolate material, in order to avoid its direct heating by the electromagnetic fields. However, an electrically conductive emitter may be also used if its melting point is much higher than the melting point of the phase change material. In one embodiment, SiC is used due to its high thermal conductivity and low vapor pressure.

In one embodiment, a vacuum is created within the cavity (12) for minimizing the convective heat transfer from the emitter (3) to the protective window (5). Alternatively, a noble gas, such as argon, may be used.

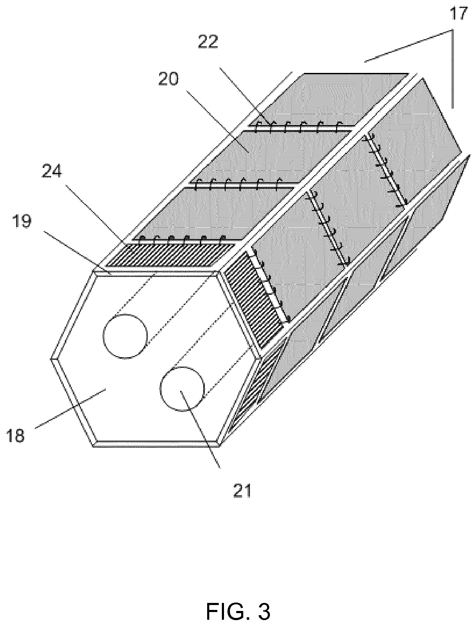

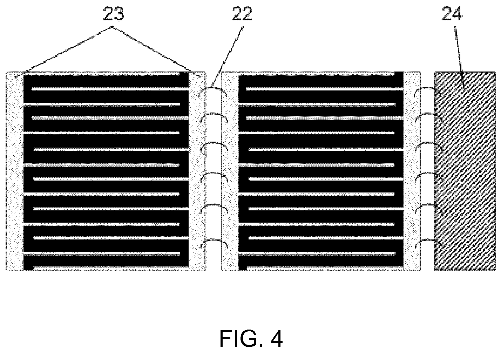

Figs. 3 and 4 show a photovoltaic device according to the embodiment of Fig. 2. The photovoltaic device comprises several photovoltaic cell strings (17), one string provided on each side of a polyhedron holder (18). Each string is mounted on a flat highly thermally conductive Direct Bonded Copper (DBC) substrate (19) that provides thermal conductivity and the adequate thermal expansion coefficient. The polyhedron holder (18) is made of copper and has an inner circuit (21) where water is introduced for active cooling of the photovoltaic cells. Each string (17) comprises several interconnected photovoltaic cells (20). Each photovoltaic cell (20) has both positive and negative contacts in the front side of the cell and the cells are interconnected by bonding wires (22) to electrically conductive paths (23) that are deposited on top of the photovoltaic cells. The final photovoltaic cell of a string is connected to an electrically conductive path (24) that is connected to an external circuit. The uncovered string area is plated with highly reflective material, such as gold, to reflect back to the emitter the radiative power not absorbed by the photovoltaic cells.

Alternatively, the photovoltaic cells may have positive and negative contacts in opposite sides of the device and be interconnected according to International Pub. No. WO 2001099201 A1, which is incorporated herein by reference.

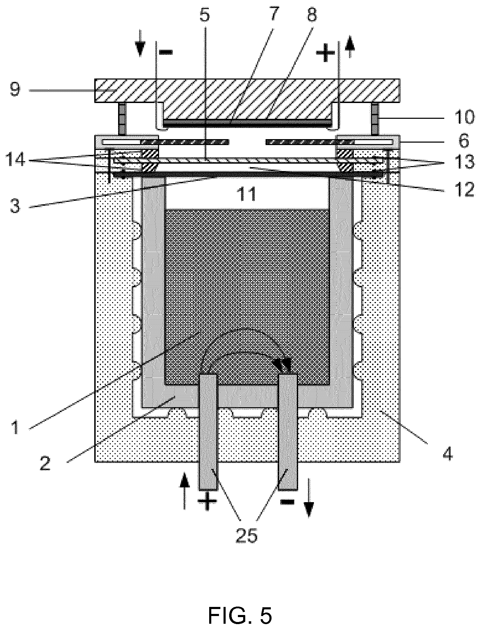

Fig. 5 shows an energy storage system according to an embodiment of the present disclosure where Joule heating is used for melting the phase change material. At least two electrodes (25) are used in this embodiment as electric means for heating for passing a high current through the phase change material (1). The phase change material is thus melted by means of Joule effect. In one embodiment, the electrodes are made of tungsten. Other refractory and electrically conductive materials such as tungsten carbide, tantalum, molybdenum, graphite, WSi₂, TiSi₂, MoSi₂, TaSi₂, Pt, Pd, Ir, Rh, Os, Re and their alloys, may be used. In this embodiment, the vessel walls (2) may be made of either electrically isolate or conductive material, so that a broad range of materials may be used, including the aforementioned ones for manufacturing the electrodes.

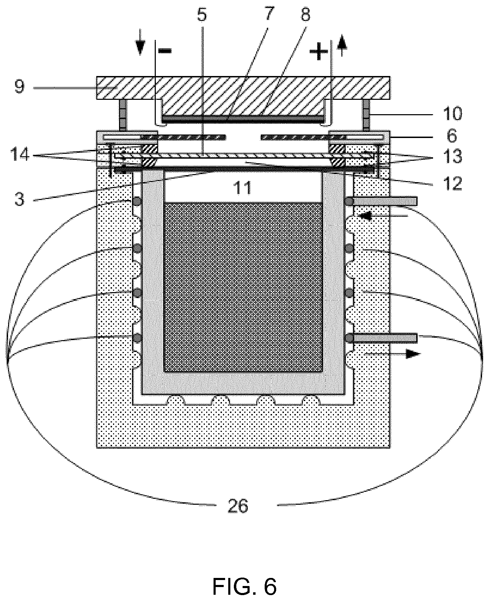

Fig. 6 shows an energy storage system according to one embodiment of the present disclosure where Joule heating is used for heating the vessel walls (2) that subsequently heat the phase change material (1). In this embodiment, the electric means for heating include resistive heaters (26) arranged in contact with the vessel walls. The vessel walls must be electrically isolating and the resistive heaters (26) must be made of an electrically conductive refractory material such as tungsten, tantalum, molybdenum, graphite, tungsten carbide, WSi₂, TiSi₂, MoSi₂, TaSi₂, Pt, Pd, Ir, Rh, Os, Re and their alloys and Fe-Cr-Al-Ni alloys such as Inconel® and Kanthal®.

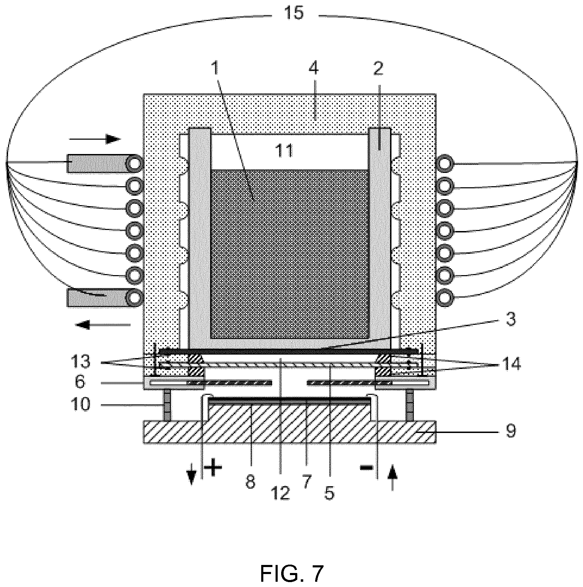

Fig. 7 shows an energy storage system according to one embodiment of the present disclosure. In this embodiment, the emitter (3) is arranged at the bottom part of the vessel (2), such that the phase change material (1) is located over the emitter. The remaining elements are analogous to those described in connection with the embodiment of Fig. 1. In the embodiment of Fig. 7, the phase change material starts solidifying from the bottom part of the vessel and therefore, the creation of a solid layer on top of the phase change material is avoided.

Also, where a phase change material is used the density of which is lower in the solid phase than in the liquid phase (such as silicon), arrangement of the emitter below the phase change material avoids the potential fracture of the vessel due to thermal stress occurring during the expansion of the phase change material during the solidifying process. This is because the liquid phase has always a volume available in the upper side of the vessel for its expansion during the solidifying process.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the present disclosure in any way. Rather, the foregoing detailed description will provide those skilled in the art with a convenient road map for implementing an exemplary embodiment, it being understood that various changes may be made in the function and arrangement of elements described in an exemplary embodiment without departing from the scope of the present disclosure as set forth in the appended claims.

## Claims

1. An energy storage system, comprising:
a vessel made of a refractory material and containing a phase change material;
a thermally insulating cover at least partially surrounding the vessel;
an emitter, made of a refractory material, having a first side arranged to be heated by the phase change material and a second side intended to radiate thermal power;
at least one photovoltaic cell arranged to receive the thermal power emitted by the second side of the emitter; and
an electric means for heating the phase change material.

2. The energy storage system according to claim 1, wherein the phase change material is selected from the group comprising: silicon, ferrosilicon, steel, copper, iron, aluminum, manganese, nickel, chromium, boron, B₄C, Si₃N₄ and Al₂O₃.

3. The energy storage system according to any of the previous claims, wherein the electric means for heating comprises a metallic coil surrounding the thermally insulating cover and means for generating an alternating electric current through the metallic coil.

4. The energy storage system according to any of the previous claims, wherein the electric means for heating the phase change material uses resistive heating to heat the phase change material.

5. The energy storage system according to claim 4, wherein the electric means for heating the phase change material comprises a plurality of resistive heaters arranged at least partially surrounding an outer wall of the vessel.

6. The energy storage system according to any of the previous claims, wherein the electric means for heating the phase change material comprises a plurality of electrodes provided within the vessel.

7. The energy storage system according to any of the previous claims, further comprising a transparent protective window provided between the emitter and the at least one photovoltaic cell.

8. The energy storage system according to any of the previous claims, wherein the emitter is cylindrical cup-shaped, the cup-shape of the emitter forming an emitter cavity that receives the at least one photovoltaic cell, wherein an outer surface of the cylindrical cup-shaped emitter is arranged to be heated by the phase change material and an inner surface of the cylindrical cup-shaped emitter is intended to radiate thermal power towards the at least one photovoltaic cell, and the vessel comprises an open hole in which the emitter is received.

9. The energy storage system according to claim 8, further comprising a plurality of photovoltaic cells provided on each side of a polyhedral-shaped photovoltaic device.

10. The energy storage system according to any of the previous claims, wherein at least part of a wall of the vessel is configured as the emitter.

11. The energy storage system according to any of the previous claims, further comprising at least one shutter located between the emitter and the at least one photovoltaic cell, such that in a closed position of the shutter the passage of radiation from the emitter to the at least one photovoltaic cell is hindered and in an open position of the shutter the passage of radiation from the emitter to the at least one photovoltaic cell is permitted.

12. The energy storage system according to any of claims 1-7 or 10, wherein the emitter is configured as an upper wall of the vessel, the energy storage system comprises at least one photovoltaic cell facing towards the emitter, and the energy storage system further comprises a shutter located between the emitter and the at least one photovoltaic cell, such that in a closed position of the shutter the passage of radiation from the emitter to the at least one photovoltaic cell is hindered and in an open position of the shutter the passage of radiation from the emitter to the at least one photovoltaic cell is permitted.

13. The energy storage system according to any of claims 1-7 or 10, wherein the emitter is located at a bottom part of the vessel, such that the phase change material is located over the emitter, the energy storage system comprises at least one photovoltaic cell facing towards the emitter, and the energy storage system further comprises a shutter located between the emitter and the at least one photovoltaic cell, such that in a closed position of the shutter the passage of radiation from the emitter to the at least one photovoltaic cell is hindered and in an open position of the shutter the passage of radiation from the emitter to the at least one photovoltaic cell is permitted.

14. The energy storage system according to any of the previous claims, further comprising a mechanism to move the at least one photovoltaic cell towards or away from the emitter.

15. The energy storage system according to any of the previous claims, further comprising a conduit suitable for carrying a fluid and arranged at least partially surrounding the vessel, between the vessel and the thermally insulating cover.

## Patentansprüche

1. Energiespeichersystem umfassend:
einen aus einem feuerfesten Material gefertigten und ein Phasenwechselmaterial enthaltenden Behälter;
eine thermisch isolierende Abdeckung, welche den Behälter wenigstens teilweise umgibt;
einen Emitter, welcher aus einem feuerfesten Material gefertigt worden ist, mit einer ersten Seite, welche so angeordnet ist, dass diese durch das Phasenwechselmaterial erhitzt wird, und mit einer zweiten Seite, welche thermische Leistung abstrahlen soll;
wenigstens eine Solarzelle, welche so angeordnet ist, dass diese durch die zweite Seite des Emitters emittierte thermische Leistung empfängt, und
ein elektrisches Mittel zum Erhitzen des Phasenwechselmaterials.

2. Energiespeichersystem nach Anspruch 1, wobei das Phasenwechselmaterial aus der Gruppe ausgewählt ist, welche umfasst: Silicium, Ferrosilicium, Stahl, Kupfer, Eisen, Aluminium, Mangan, Nickel, Chrom, Bor, B₄C, Si₃N₄ und Al₂O₃.

3. Energiespeichersystem nach einem der vorhergehenden Ansprüche, wobei das elektrische Mittel zum Erhitzen eine metallische Spule, welche die thermisch isolierende Abdeckung umgibt, und Mittel zum Erzeugen eines Wechselstroms durch die metallische Spule umfasst.

4. Energiespeichersystem nach einem der vorhergehenden Ansprüche, wobei das elektrische Mittel zum Erhitzen des Phasenwechselmaterials Widerstandsheizen nutzt, um das Phasenwechselmaterial zu erhitzen.

5. Energiespeichersystem nach Anspruch 4, wobei das elektrische Mittel zum Erhitzen des Phasenwechselmaterials eine Vielzahl von Widerstandsheizungen umfasst, welche so angeordnet sind, dass diese eine Außenwand des Behälters wenigstens teilweise umgeben.

6. Energiespeichersystem nach einem der vorhergehenden Ansprüche, wobei das elektrische Mittel zum Erhitzen des Phasenwechselmaterials eine Vielzahl von in dem Behälter vorgesehenen Elektroden umfasst.

7. Energiespeichersystem nach einem der vorhergehenden Ansprüche, welches desweitern ein transparentes Schutzfenster umfasst, welches zwischen dem Emitter und der wenigstens einen Solarzelle angeordnet ist.

8. Energiespeichersystem nach einem der vorhergehenden Ansprüche, wobei der Emitter zylindrisch topfförmig ist, wobei die Topfform des Emitters einen Emitterhohlraum ausbildet, welcher die wenigstens eine Solarzelle aufnimmt, wobei eine Außenfläche des zylindrisch topfförmigen Emitters so angeordnet ist, dass diese durch das Phasenwechselmaterial erhitzt wird, und wobei eine Innenfläche des zylindrisch topfförmigen Emitters thermische Leistung zu der wenigstens einen Solarzelle abstrahlen soll, und wobei der Behälter ein offenes Loch aufweist, in dem der Emitter aufgenommen ist.

9. Energiespeichersystem nach Anspruch 8, welches desweitern eine Vielzahl von Solarzellen aufweist, welche auf jeder Seite einer polyedrisch geformten photovoltaischen Vorrichtung angeordnet ist.

10. Energiespeichersystem nach einem der vorhergehenden Ansprüche, wobei wenigstens ein Teil der Wand des Behälters als der Emitter ausgebildet ist.

11. Energiespeichersystem nach einem der vorhergehenden Ansprüche, welches desweitern wenigstens einen Verschluss aufweist, welcher zwischen dem Emitter und der wenigstens einen Solarzelle angeordnet ist, so dass in einer geschlossenen Position des Verschlusses der Strahlungsweg von dem Emitter zu der wenigstens einen Solarzelle behindert ist und in einer offenen Position des Verschlusses der Strahlungsweg von dem Emitter zu der wenigstens einen Solarzelle frei ist.

12. Energiespeichersystem nach einem der Ansprüche 1 bis 7 oder 10, wobei der Emitter als eine obere Wand des Behälters ausgestaltet ist, wobei das Energiespeichersystem wenigstens eine Solarzelle umfasst, welche dem Emitter zugewandt ist, und das Energiespeichersystem ferner wenigstens einen Verschluss umfasst, welcher zwischen dem Emitter und der wenigstens einen Solarzelle angeordnet ist, so dass in einer geschlossenen Position des Verschlusses der Strahlungsweg von dem Emitter zu der wenigstens einen Solarzelle behindert ist und in einer offenen Position des Verschlusses der Strahlungsweg von dem Emitter zu der wenigstens einen Solarzelle frei ist.

13. Energiespeichersystem nach einem der Ansprüche 1 bis 7 oder 10, wobei der Emitter an einem Bodenteil des Behälters angeordnet ist, so dass das Phasenwechselmaterial über dem Emitter angeordnet ist, wobei das Energiespeichersystem wenigstens eine Solarzelle umfasst, welche dem Emitter zugewandt ist, und das Energiespeichersystem ferner wenigstens einen Verschluss umfasst, welcher zwischen dem Emitter und der wenigstens einen Solarzelle angeordnet ist, so dass in einer geschlossenen Position des Verschlusses der Strahlungsweg von dem Emitter zu der wenigstens einen Solarzelle behindert ist und in einer offenen Position des Verschlusses der Strahlungsweg von dem Emitter zu der wenigstens einen Solarzelle frei ist.

14. Energiespeichersystem nach einem der vorhergehenden Ansprüche, welches desweitern wenigstens einen Mechanismus zum Bewegen der wenigstens einen Solarzelle hin zu dem oder weg von dem Emitter umfasst.

15. Energiespeichersystem nach einem der vorhergehenden Ansprüche, welches desweitern zwischen dem Behälter und der thermisch isolierenden Abdeckung eine Leitung umfasst, welche zum Transportieren einer Flüssigkeit geeignet ist und den Behälter wenigstens teilweise umgebend angeordnet ist.

## Revendications

1. Un système de stockage d'énergie, comprenant :
un récipient fait d'un matériau réfractaire et contenant un matériau à changement de phase ;
un couvercle thermiquement isolant entourant au moins partiellement le récipient ;
un émetteur, fait d'un matériau réfractaire, ayant un premier côté agencé pour être chauffé par le matériau à changement de phase et un deuxième côté destiné à émettre de la puissance thermique de façon radiante ;
au moins une cellule photovoltaïque agencée pour recevoir la puissance thermique émise par le deuxième côté de l'émetteur ; et
un moyen électrique pour chauffer le matériau à changement de phase.

2. Le système de stockage d'énergie selon la revendication 1, dans lequel le matériau à changement de phase est choisi dans le groupe comprenant : silicium, ferrosilicium, acier, cuivre, fer, aluminium, manganèse, nickel, chrome, bore, B₄C, Si₃N₄ et Al₂O₃.

3. Le système de stockage d'énergie selon l'une quelconque des revendications précédentes, dans lequel les moyens électriques de chauffage comprennent une bobine métallique entourant le couvercle thermiquement isolant et des moyens pour générer un courant électrique alternatif à travers la bobine métallique.

4. Le système de stockage d'énergie selon l'une quelconque des revendications précédentes, dans lequel les moyens électriques pour chauffer le matériau à changement de phase utilisent un chauffage résistif pour chauffer le matériau à changement de phase.

5. Le système de stockage d'énergie selon la revendication 4, dans lequel les moyens électriques pour chauffer le matériau à changement de phase comprennent une pluralité d'éléments chauffants résistifs agencés de façon à entourer au moins partiellement une paroi externe du récipient.

6. Le système de stockage d'énergie selon l'une quelconque des revendications précédentes, dans lequel les moyens électriques pour chauffer le matériau à changement de phase comprennent une pluralité d'électrodes prévues à l'intérieur du récipient.

7. Le système de stockage d'énergie selon l'une quelconque des revendications précédentes, comprenant en outre une fenêtre de protection transparente prévue entre l'émetteur et ladite au moins une cellule photovoltaïque.

8. Le système de stockage d'énergie selon l'une quelconque des revendications précédentes, dans lequel l'émetteur est en forme de coupelle cylindrique, la forme en coupelle de l'émetteur formant une cavité d'émetteur qui reçoit ladite au moins une cellule photovoltaïque, une surface externe de l'émetteur en forme de coupelle cylindrique étant agencé pour être chauffé par le matériau à changement de phase et une surface interne de l'émetteur en forme de coupelle cylindrique étant destinée à émettre de la puissance thermique de façon radiante vers ladite au moins une cellule photovoltaïque, et le récipient comprenant un trou ouvert dans lequel l'émetteur est reçu.

9. Le système de stockage d'énergie selon la revendication 8, comprenant en outre une pluralité de cellules photovoltaïques prévues de chaque côté d'un dispositif photovoltaïque en forme de polyèdre.

10. Le système de stockage d'énergie selon l'une quelconque des revendications précédentes, dans lequel au moins une partie d'une paroi du récipient est configurée en tant qu'émetteur.

11. Le système de stockage d'énergie selon l'une quelconque des revendications précédentes, comprenant en outre au moins un volet situé entre l'émetteur et ladite au moins une cellule photovoltaïque, de telle sorte que, dans une position fermée du volet, le passage du rayonnement depuis l'émetteur vers ledit au moins une cellule photovoltaïque est empêché et que, dans une position ouverte du volet, le passage du rayonnement depuis l'émetteur vers ladite au moins une cellule photovoltaïque est autorisé.

12. Le système de stockage d'énergie selon l'une quelconque des revendications 1 à 7 ou 10, dans lequel l'émetteur est configuré selon une paroi supérieure du récipient, le système de stockage d'énergie comprend au moins une cellule photovoltaïque tournée vers l'émetteur et le système de stockage d'énergie comprend en outre un obturateur situé entre l'émetteur et ladite au moins une cellule photovoltaïque, de sorte que, dans une position fermée du volet, le passage du rayonnement depuis l'émetteur vers ladite au moins une cellule photovoltaïque est empêché et que, dans une position ouverte du volet, le passage du rayonnement de l'émetteur vers ladite au moins une cellule photovoltaïque est autorisé.

13. Le système de stockage d'énergie selon l'une quelconque des revendications 1 à 7 ou 10, dans lequel l'émetteur est situé dans une partie inférieure du récipient, de sorte que le matériau à changement de phase soit situé au-dessus de l'émetteur, le système de stockage d'énergie comprend au moins cellule photovoltaïque tournée vers l'émetteur, et le système de stockage d'énergie comprend en outre un volet situé entre l'émetteur et ladite au moins une cellule photovoltaïque, de telle sorte que, dans une position fermée du volet, le passage du rayonnement depuis l'émetteur vers ladite au moins une cellule photovoltaïque est empêchée et que, dans une position ouverte du volet, le passage du rayonnement depuis l'émetteur vers ladite au moins une cellule photovoltaïque est autorisé.

14. Le système de stockage d'énergie selon l'une quelconque des revendications précédentes, comprenant en outre un mécanisme pour déplacer ladite au moins une cellule photovoltaïque en direction de l'émetteur ou en éloignement de celui-ci.

15. Le système de stockage d'énergie selon l'une quelconque des revendications précédentes, comprenant en outre un conduit approprié pour transporter un fluide et agencé de façon à entourer au moins partiellement le récipient, entre le récipient et le couvercle thermiquement isolant.
